# EUROPEAN PATENT APPLICATION

(11) **EP 1 571 719 A1**
(43) Date of publication of application: **07.09.2005**
(21) Application number: 04005273.0
(22) Date of filing: 05.03.2004
(51) Int. Cl.: H01M 2/10, H04M 1/22, G02F 1/13357, F21V 33/00, H01H 9/02

(54) **A rechargeable battery and an electronic device**

(71) Applicant: SIEMENS AKTIENGESELLSCHAFT, 80333 München (DE)
(72) Inventor: Hoeyer, Michael, 9200 Aalborg SV (DK)

(57) **Abstract**

A rechargeable battery (100) comprises a housing (113), at least one battery element (115), and
- a light source (111) assembled to form a part of contact surface (S) of the rechargeable battery (100), the contact surface (S) adapted to receive an electronic device (200); and
- means (107) for receiving a control signal for switching the light source (111) on or off.

## Description

### Field of the invention

The invention relates to lighting the display, keypad, or housing in an electronic device.

### Background

Many electronic devices comprise a display or keypad. For both aesthetic and usability reasons, an electronic device usually comprises also means for providing light for the keypad or display. A clear advantage of the so-called back-lighting is that the legibility of the display or keypad is thereby improved especially when the electronic device is used in poorly lit surroundings.

The light source or sources used in an electronic device is/are often exposed to temperatures changing within a large temperature range. The light source or sources have to be able to resist physical shocks, wear and tear. If a light source fails, it is usually not viable to change it due to high labour costs. The resulting requirement for high reliability thus reduces the availability of different colours and makes of the light sources. Therefore it remains a problem to improve the back-lighting means.

### Short description of the invention

An objective of the invention is to bring out a rechargeable battery as set out in claim 1, comprising a light source assembled to form a part of contact surface of the rechargeable battery, the contact surface adapted to receive an electronic device; and means for receiving a control signal for switching the light source on or off.

A still further objective of the invention is to enable an easier changing the colour of the backlight. This can be achieved as set out in claim 2.

A still further objective of the invention is to enable the controlling of the brightness of a light source assembled in a rechargeable battery. This can be achieved as set out in claim 3. Claims 4 and 5 define advantageous embodiments for this objective of the invention.

Another objective of the invention is to bring out an electronic device enabling receiving light for backlighting the display or keypad from a rechargeable battery. This can be achieved as set out in claims 6 or 7.

A still further objective of the invention is to enable changing the backlight colour in such an electronic device. This can be achieved as set out in claims 8 or 9.

A still further objective of the invention is to enable controlling the brightness of the backlight in such an electronic device. This can be achieved as set out in claims 10 or 11.

### Advantages of the invention

By backlighting a keypad or display of an electronic device in such a manner that the light source is assembled into the rechargeable battery, the maintenance can be made easier. If a light source fails, it is enough to change the rechargeable battery, thereby saving much work and costs. Furthermore, the changing of the rechargeable battery can in many cases be performed by the user, thus relieving the burden of the manufacturer to provide support and maintenance services in large geographical areas.

By changing the colour of the backlight, personalization of the electronic device can be improved. Personalization has in fact been one of the driving trends in the rapid expansion e.g. on the mobile terminals market during the past decade. Even though that for many electronic devices there are different personalization means - ringing tones, logos, and exchangeable covers - it has so far not been possible to easily change the colour of the display or keypad.

If the colour of the light is changed by using a filter that the user may change him- or herself, an easy and affordable manner of personalizing an electronic device can be brought out.

The brightness of the backlight can be changed by changing width of current pulses, or their frequency, for example. By changing the brightness of the backlight, comfort of use can be improved. Furthermore, changing the backlight can be used for alerting user, e.g. because of an incoming message (SMS, MMS, email, chat connection) or a mobile-terminated call.

Further, depending on the implementation, power efficiency of the backlight can be improved. Because the manufacturers are not limited any more to use the light source providing the longest lifetime, other light sources - such as those having a better power efficiency - can be used.

### List of Figures

In the following, the invention is described in more detail with references to examples shown in the appended drawings in Figures 1 to 3, wherein:
Figure 1 shows a rechargeable battery;
Figure 2 shows the rechargeable battery assembled into an electronic device; and
Figure 3 shows some more details of a rechargeable battery and of an electronic device accordingg to some aspects of the present invention.

### Detailed description

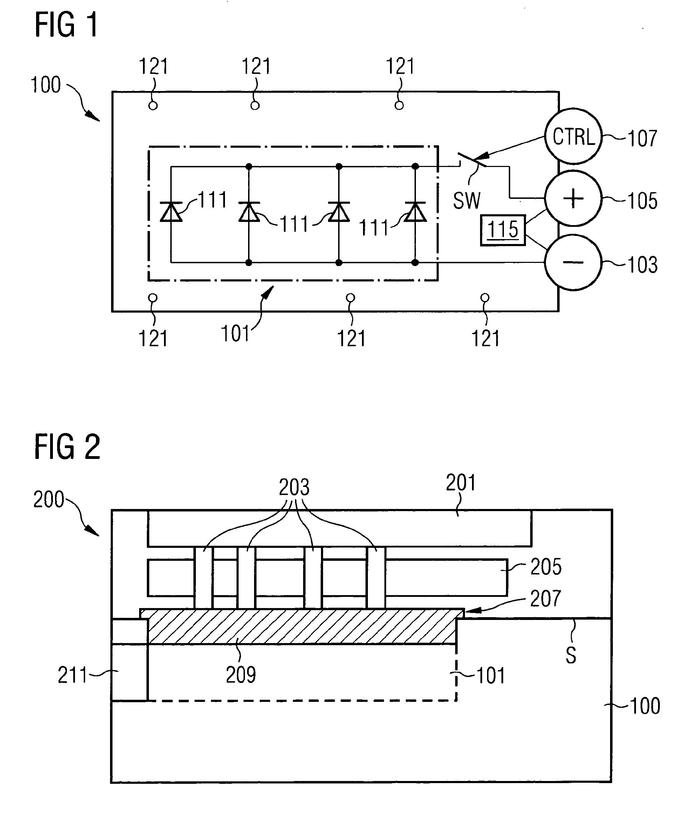

Figure 1 shows a rechargeable battery 100. The rechargeable battery 100 usually comprises charge connectors 103 and 105, marked in Figure 1 also with plus and minus signs, extending to an opening in the housing 113. The charge connectors 103, 105 are usually connected to at least one battery element 115. The battery element 115 may comprise any suitable material; the most widely used battery elements on the market are Nickel-Cadmium (NiCd), Nickel-Magnesium-Hybride (NiMH), and Lithium-Ion (LiOn) battery elements.

Currently many technologies for utilizing fuel cells as energy source are evolving. For this reason, a battery element may consist of or further comprise one or more fuel cells as well.

The rechargeable battery 100 of Figure 1 further comprises an optical module 101 (marked with dashed line). The optical module 101 comprises a number of light sources 111, such as LEDs. The number of light sources 111 is not limited, but for the considerations of available size in a small device, the number might preferably be between 1 and 50. The light sources 111 are connected to the battery charge outlet connectors 103 and 105 or directly to the battery element 115 in such a manner that switch SW can open or close the circuit. The light sources are preferably assembled in the housing 113 in such a manner that they extend above the surface of the housing 113. The optical module 101 and the light sources 111 are preferably assembled on a contact surface S of the rechargeable battery 100. The contact surface S is adapted to receive an electronic device 200.

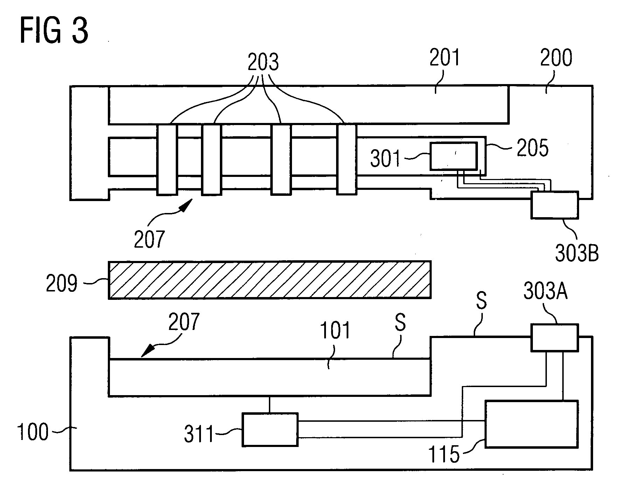

The switch SW can be controlled by a control signal obtained from one of the battery connectors 103, 105, or from a specific control connector 107. Figure 3 shows another embodiment where the switch SW is connected by a battery monitor chip 311.

The rechargeable battery 100 may further comprise means 121 for fixing it to the housing of the electronic device 200. This is however by no means necessary because some manufacturers have the rechargeable battery 100 completely inside the electronic device 200, the electronic device 200 then possibly comprising suitable receiving means for the rechargeable battery 100. Some other manufacturers have the rechargeable battery 100 forming a part of the housing of the electronic device 200.

Figure 2 shows the rechargeable battery 100 inserted into an electronic device 200. The electronic device 200 obtains its operating current from a rechargeable battery 100. The electronic device 200 comprises a display 201 or a keypad.

For clarity, the following example of carrying out the invention is described using a display 201 as an example; for a keypad and housing, an analogic approach is applicable.

The optical module 101 is on the contact surface S of the rechargeable battery 100 so that when the rechargeable battery 100 is connected to the electronic device 200, the optical module 101 is on the side of the display 201 of the electronic device 200. The light guides 203 can be led directly, or through a Printed Circuit Board PCB 205 of the electronic device 200, from the optical module 101 to the display 201. The starting position of the light guides 203 on the rechargeable battery 100 side is so adjusted that they receive enough light from the light sources 111 in the optical module 101. Their purpose is to guide light from the optical module 101 to the display 201, such as an LCD module. Instead of real light guides 203, also a passage in the PCB 205 can do.

Both electronic device 200 and rechargeable battery 100 may comprise a recess 207 for receiving a coloured filter 209. The recess 207 may also wholly be in the electronic device 200 or in the rechargeable battery 100. Now because of the coloured filter 209, the colour of the light can be changed. The material of the coloured filter 209 can basically be anything that provides a suitable transparency and colour. A plastic foil, such as of acrylic resin, is a very simple solution. The light guides 209 can also be used to support the PCB 209 or the optical module 101. In order to firmly accomodate the coloured transparent foil, contact force between the rechareable battery 100 and the electronic device 200 can keep the coloured filter 209 firmly in place.

By placing the light sources 101 into the rechargeable battery 100, heat dissipation in the wiring of the electronic device 200 can be reduced. We have perceived that if LEDs are used as light sources in a mobile terminal, they are the largest heat source if the light sources are on for a longer period. Such a situtation may occur when the user is playing a game, depending of course on the type of the electronic device. By implementing the positioning of the light sources 101 according to the invention, heat generation can be removed from the electronic device 200 and transferred to to the rechargeable battery 100. In the rechargeable battery 100 it is relatively easy to implement means for efficiently distributing the heat to a larger area. Further, we can add ventilation 211 to the optical module 101 as shown in Figure 2. This can easily be performed by using a suitable ventile consisting of a foil consisting of material having a large thermal coefficient. In this manner, the problem of humidity entering the optical module can also be avoided, for example by using a sort of GORE-TEX -type material in the ventilation 211.

Figure 3 shows some more details of a rechargeable battery 100 and of an electronic device 200, according to a further aspect of the invention. The electronic device 200 may further comprise a processing unit 301, such as a microprocessor, assembled on the PCB 205. The processing unit 301 obtains its operating current from the rechargeable battery 100 through electrical connector 303B in the electronic device 200 and counterpiece 303 in the rechargeable battery 100, and using suitable leads or connections in the PCB.

The processing unit 303 can further communicate with a battery monitor chip 311 in the rechargeable battery 100. The communication takes place by using a control connector 107 in the rechargeable battery, e.g. connecting the battery monitor chip 311 to the bus to where the processing unit 303 is connected too. The communication may also take place wirelessly, such as by using a local radio connection (Bluetooth etc) or infrared means in both the rechargeable battery 100 and in the electronic device 200.

For example, a monitor chip 311 known also as a fuel gauge chip, an ASIC of type BQ26200 from Texas Instruments already comprises a general-purpose input/output for performing switching. However, in the current version of the monitor chip 311 there is no pulse-width modulation for controlling the backlight intensity (brightness) yet. Implementing it is, nevertheless, a straightforward task.

The brightness control can be performed so that the processing unit 301 sends a brightness code, such as a number between 0-FF (in hexadecimal), corresponding to a pulse-width modulation factor. Then the monitor chip 311 sets the right pulse-width modulation for the light. In order not to cause flickering, the current pulses for emitting light should be sent in a high frequency, more than 100 Hz. Then by shortening the pulses or by changing their frequency, the light intensity of the light sources 111 in the optical module 101 can be changed.

The battery monitor chip 311 monitors the battery elements 115 and is further adapted to switch on or off one or more light sources 111 in the optical module 101, for example, by controlling a number of switches, each of which can close the circuit between light source 111 and the battery element 115. Using this embodiment, the battery monitor chip 311 can further be adapted not to switch on the light sources 111 if the charge status of the rechargeable battery 100 falls below a predefined limit. In this manner, the operating or standby time of the electronic device 200 can be prolonged.

In a further embodiment of the invention, the battery monitor chip 311 is adapted to switch on at least one light source 111, preferably all light sources, in response to detecting that current is taken from any of the battery elements 115.

In a still further embodiment of the invention, the battery monitor chip 311 is adapted first to switch on a first number (e.g. 1 or 2) of light sources 111 when it detects that current is taken from any of the battery elements 115. After a predefined period, if current is still taken from any of the battery elements 115 in excess to the current taken by the light sources 111, a second number (e.g. 2 or 4, respectively) of light sources 111 is switched on. After a further predefined period, if current is still taken from any of the battery elements 115 in excess to the current taken by the light sources 111, a third number (e.g. 4 or 8, respectively) of light sources is switched on.

An advantage of the latter embodiment is that instead of switching all light sources 111 in the rechargeable battery on at once, their switching can be prolonged over some time. The number of steps for switching on the light sources 111 can be deliberate, so basically already in the second switching all light sources 111 can be switched on. Three (as shown above) or four steps can also be performed. A short use period of the electronic device 200 does not, therefore, cause too much current consumption. However, if the use continues, e.g. if the user writes a short message (when the electronic device 200 is a mobile terminal) the comfort of use does not degrade though energy is consumed.

In a still further embodiment of the invention, the electronic device 200 is adapted to command the battery monitor chip 311 to switch light souces 101 off even though current would be taken from any of the battery elements 115 in excess to the current taken by the light sources 111.

In an embodiment of the invention, the profiles in which occasions the light sources 111 are switched on or off is programed into memory of the electronic device as profiles. The profiles may then comprise also switching sequences describing the order in which the light sources 101 are turned on or off.

The invention was described having a display as the example. Instead of or in addition to providing back-light to a display, the light guides 203 can be adapted to a guide light to a keypad as well. Furthermore, instead of or in addition to providing back-light to a display and/or keypad, the invention can also be used to bring out an electronic device 200 which has a housing that can be lit. Then the frontal part of the housing of the electronic device 200 can be lit up. Furthermore, the optical module 101 can in this case be used to bring dynamic light to the housing of the electronic device 200.

For adjusting the backlight, a menu can be added to the User Interface of the electronic device 200. The user can then, preferably, change the intensity or the color of the light.

The invention is not limited to any particular electronic device, but any electronic device can do. Some particular examples of electronic devices includes telephones, mobile terminals, Personal Digital Assistants, electronic shavers, remote controls, household machines, and so forth.

The invention is not limited to the examples described in the description but is to be defiend as the scope of the patent claims.

## Claims

1. A rechargeable battery (100) comprising a housing (113) and at least one battery element (115), **characterized in that**: said rechargeable battery (100) further comprises:
- a light source (111) assembled to form a part of contact surface (S) of the rechargeable battery (100), the contact surface (S) adapted to receive an electronic device (200); and
- means (107) for receiving a control signal for switching the light source (111) on or off.

2. A rechargeable battery (100) of claim 1, further comprising: receiving means (207) for a coloured filter (209).

3. A rechargeable battery (100) of claim 1 or 2, further comprising: means (311) for controlling the brightness of the light source (111).

4. A rechargeable battery (100) of claim 3, **wherein**: the means (311) for controlling the brightness of the light source (111) is a battery monitor chip.

5. A rechargeable battery (100) of claim 3 or 4, **wherein:** the means (311) for controlling the brightness of the light source (111) is adapted to control the brighness of the light source (111) by changing a pulse frequency or a pulse width.

6. An electronic device (200) comprising: a light guide (203) for guiding light into a display (201) or a keypad, or a housing, the said light guide (203) adapted to receive light emitted from a light source (111), **characterized in that**: said light source (111) is assembled into or onto a rechargeable battery (100).

7. An electronic device (200) of claim 6, further **comprising:**
means (301, 302, 303) for transmitting a control signal for switching the light source (111) of the rechargeable battery (100) on or off.

8. An electronic device (200) according to claim 6 or 7, further **comprising:** means (207) for receiving a coloured filter (209) for changing the colour of light received from a light source (111) in a rechargeable battery (100).

9. An electronic device (200) according to any one of claims 6 to 8, further **comprising:** means (211, 213) for receiving a rechargeable battery (100), adapted to bring out a contact force between the rechargeable battery (100) and the electronic device (200) for holding a coloured filter (209) in the rechargeable battery (100), in the electronic device (200), or between the rechargeable battery (100) and the electronic device (200).

10. An electronic device (200) according to any one of claims 6 to 9, further **comprising:** means (301) for generating a command for controlling the brightness of the light source (111).

11. An electronic device (200) of claim 10, **wherein:** said means (301) for generating the command for controlling the brightness of the light source (111) are adapted to change a pulse width or pulse frequency of a battery monitor chip (311).
